# EUROPÄISCHE PATENTSCHRIFT

(11) **EP 3 347 247 B1**
(45) Veröffentlichungstag und Bekanntmachung des Hinweises auf die Patenterteilung: **13.03.2024**
(21) Anmeldenummer: 16741287.3
(22) Anmeldetag: 15.07.2016
(51) Int. Cl.: B60T 7/16, B60T 7/12, B60W 30/09, G05D 1/02, G08G 1/14, G08G 1/16

(54) **VERFAHREN UND VORRICHTUNG ZUM BETREIBEN EINES FAHRZEUGS SOWIE VERFAHREN ZUM BETREIBEN EINES PARKPLATZES**
METHOD AND DEVICE FOR OPERATING A VEHICLE, AND METHOD FOR OPERATING A PARKING AREA
PROCÉDÉ ET DISPOSITIF POUR FAIRE FONCTIONNER UN VÉHICULE ET PROCÉDÉ D'UTILISATION D'UN PARC DE STATIONNEMENT

(30) Priorität: 11.09.2015 DE 102015217390
(43) Veröffentlichungstag der Anmeldung: 18.07.2018
(73) Patentinhaber: Robert Bosch GmbH, 70442 Stuttgart (DE)
(72) Erfinder: NORDBRUCH, Stefan, 70806 Kornwestheim (DE); QUAST, Gerrit, 72622 Nuertingen (DE); NIMMO, Matthew, 71642 Ludwigsburg (DE)
(86) Internationale Anmeldenummer: PCT/EP2016/066862
(87) Internationale Veröffentlichungsnummer: WO 2017/041939

(56) Entgegenhaltungen:
- EP-A2- 2 695 797
- DE-A1-102012 202 175
- DE-A1-102012 203 235
- US-A1- 2014 186 146

## Beschreibung

Die Erfindung betrifft ein Verfahren zum Betreiben eines Fahrzeugs und zum Betreiben eines Parkplatzes. Die Erfindung betrifft einen Parkplatz für Fahrzeuge. Die Erfindung betrifft ein Computerprogramm.

### Stand der Technik

Die Offenlegungsschrift DE 10 2012 203 235 A1 offenbart ein Verfahren zum automatischen Durchführen eines Fahrmanövers.

Die Offenlegungsschrift US 2014/0186146 A1 offenbart ein automatisches Parksystem.

Die Offenlegungsschrift EP 2 695 797 A2 offenbart ein Verfahren zum fahrerlosen Bewegen eines Fahrzeugs auf einer Parkfläche.

Die Offenlegungsschrift DE 10 2012 202 175 A1 offenbart ein Verfahren zum automatischen Führen, insbesondere Einparken, eines Kraftfahrzeugs.

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Beim sogenannten vollautomatisierten Valet Parking ist es wichtig, dass das autonom fahrende Fahrzeug keine Unfälle verursacht, zum Beispiel mit einem Objekt, welches sich innerhalb des Parkplatzes befindet, kollidiert.

### Offenbarung der Erfindung

Die der Erfindung zugrunde liegende Aufgabe ist darin zu sehen, ein effizientes Konzept bereitzustellen, welches ein Unfall- oder Kollisionsrisiko für ein innerhalb eines Parkplatzes führerlos fahrendes Fahrzeug effizient verringert.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs nach Anspruch 1 bereitgestellt.

Gemäß einem weiteren Aspekt wird ein Verfahren zum Betreiben eines Parkplatzes nach Anspruch 4 bereitgestellt.

Nach einem anderen Aspekt wird ein Parkplatz für Fahrzeuge bereitgestellt, wobei der Parkplatz ausgebildet ist, das Verfahren zum Betreiben eines Parkplatzes für Fahrzeuge durchzuführen.

Nach einem weiteren Aspekt wird ein Computerprogramm bereitgestellt, welches Programmcode zur Durchführung des Verfahrens zum Betreiben eines Fahrzeugs und/oder zur Durchführung eines Verfahrens zum Betreiben eines Parkplatzes für Fahrzeuge umfasst, wenn das Computerprogramm auf einem Computer ausgeführt wird.

Die Erfindung umfasst also insbesondere und unter anderem den Gedanken, dass das führerlos fahrende Fahrzeug unmittelbar ansprechend auf das Notstoppsignal anhält, ohne dass zuvor noch eine Überprüfung vorgesehen ist respektive durchgeführt wird, ob das Anhalten überhaupt notwendig ist. Das heißt also, dass keine Überprüfung durchgeführt wird, ob das Anhalten notwendig ist. Es wird stattdessen unmittelbar ansprechend auf das Notstoppsignal ein führerloses Anhalten mittels des Fahrzeugs durchgeführt.

Dadurch wird insbesondere der technische Vorteil bewirkt, dass ein Kollisions- oder Unfallrisiko für das führerlos fahrende Fahrzeug reduziert ist. Denn dadurch, dass von einer Überprüfung abgesehen wird, vergeht weniger Zeit, bis das Fahrzeug ansprechend auf das Notstoppsignal anhält, verglichen zu dem Fall, in dem zuvor noch eine Überprüfung durchgeführt wird. Denn eine Überprüfung benötigt in der Regel eine gewisse Zeit, bis sie zu einem Ergebnis kommt. In dieser Zeit allerdings fährt das führerlos fahrende Fahrzeug weiter, sodass dann gegebenenfalls ein Bremsweg nicht mehr ausreichen könnte, um eine Kollision mit einem Objekt zu verhindern.

Ein Fahrzeug ist nach einer Ausführungsform ein Kraftfahrzeug. Das Kraftfahrzeug ist zum Beispiel ein Personenkraftwagen (Pkw) oder ein Lastkraftwagen (Lkw). Das Kraftfahrzeug ist zum Beispiel ein zweirädriges Kraftfahrzeug, zum Beispiel ein Motorrad.

Dass das Fahrzeug führerlos fährt, bedeutet oder heißt, dass das Fahrzeug nicht von einem menschlichen Fahrer oder menschlichen Fahrzeugführer gesteuert oder geführt wird. Eine führerlose Fahrt umfasst zum Beispiel, dass das Fahrzeug ferngesteuert wird. Dies bedeutet zum Beispiel, dass Fernsteuerungsbefehle an das Fahrzeug gesendet werden. Eine führerlose Fahrt umfasst zum Beispiel, dass das Fahrzeug autonom, also selbstständig, fährt. Zum Beispiel sind Mischformen vorgesehen, das heißt, dass das Fahrzeug eine Teilstrecke ferngesteuert wird und eine andere Teilstrecke autonom fährt.

Zum Beispiel ist vorgesehen, dass dem Fahrzeug eine Zielposition innerhalb des Parkplatzes übermittelt wird, wobei das Fahrzeug dann zu dieser Zielposition autonom, also selbstständig, fährt. Das Fahrzeug navigiert zum Beispiel zu der Zielposition basierend auf einer digitalen Karte des Parkplatzes. Diese digitale Karte wird dem Fahrzeug zum Beispiel über ein Kommunikationsnetzwerk übermittelt. Allgemein werden zum Beispiel dem Fahrzeug Informationen über das Kommunikationsnetzwerk übermittelt, die relevant für eine autonome Fahrt innerhalb des Parkplatzes sind. Das Fahrzeug fährt dann basierend auf diesen Informationen autonom innerhalb des Parkplatzes, insbesondere zur Zielposition. Solche Informationen umfassen zum Beispiel: Positionen von weiteren Fahrzeugen, Geschwindigkeitsdaten von weiteren Fahrzeugen, eine vom Fahrzeug abzufahrende Solltrajektorie.

Dass das Verfahren frei von einem Schritt des Überprüfens ist, ob das Anhalten notwendig ist, heißt also insbesondere, dass in dem Verfahren nicht vorgesehen ist, dass überprüft wird, ob das Anhalten notwendig ist. Es findet also keine Überprüfung statt, ob das Anhalten notwendig ist. Es wird also davon abgesehen, zu überprüfen, ob das Anhalten notwendig ist. Es wird also auf die Überprüfung verzichtet.

Es ist vorgesehen, dass das Notstoppsignal fahrzeugextern erzeugt und ohne nochmalige Überprüfung, ob das Anhalten notwendig ist, an das Fahrzeug gesendet wird, wobei das Fahrzeug unmittelbar ansprechend auf einen Empfang des Notstoppsignals anhält.

Dadurch wird insbesondere der technische Vorteil bewirkt, dass keine Zeit für eine Überprüfung benötigt wird, sodass ein für das Fahrzeug zur Verfügung stehender Bremsweg nicht entsprechend verkürzt wird bezogen auf den Fall, in dem zuvor noch eine Überprüfung stattfinden würde.

Das Senden des Notstoppsignals an das Fahrzeug heißt, dass das Notstoppsignal über ein Kommunikationsnetzwerk an das Fahrzeug gesendet wird.

Ein Kommunikationsnetzwerk im Sinne der vorliegenden Erfindung umfasst insbesondere ein WLAN-Kommunikationsnetzwerk und/oder ein Mobilfunknetzwerk und/oder ein Kommunikationsnetzwerk nach dem LoRa-Standard. "LoRa" steht für "Low Power Wide-Range Communication". Das Kommunikationsnetzwerk umfasst somit nach einer Ausführungsform ein LoRa-Kommunikationsnetzwerk.

In einer anderen Ausführungsform wird respektive ist eine Kommunikation über das Kommunikationsnetzwerk verschlüsselt.

Die Formulierung "respektive" umfasst insbesondere die Formulierung "und/oder".

Erfindungsgemäß ist vorgesehen, dass das Notstoppsignal ein fahrzeugextern erzeugtes Notstoppsignal ist. Das Fahrzeug empfängt dieses fahrzeugextern erzeugte Notstoppsignal nach erfindungsgemäß über das Kommunikationsnetzwerk und hält unmittelbar ansprechend auf den Empfang des Notstoppsignals an ohne nochmalige Überprüfung, ob das Anhalten notwendig ist. Das heißt also, dass das Fahrzeug selbst ebenfalls keine Überprüfung mehr durchführt, ob das Anhalten notwendig ist.

Es ist vorgesehen, dass das Fahrzeug das Notstoppsignal von einem Teilnehmer eines Kommunikationsnetzwerks über das Kommunikationsnetzwerk empfängt.

Dadurch wird insbesondere der technische Vorteil bewirkt, dass Teilnehmer des Kommunikationsnetzwerks effizient das Fahrzeug mittels des Notstoppsignals stoppen können. Ein Teilnehmer des Kommunikationsnetzwerks ist zum Beispiel eine Person, die sich innerhalb des Parkplatzes befindet. Die Person umfasst zum Beispiel ein Endgerät, insbesondere ein mobiles Endgerät, mittels welchem die Person über das Kommunikationsnetzwerk kommunizieren kann. Die Person wird somit mittels des Endgeräts zum Teilnehmer des Kommunikationsnetzwerks.

Somit ist also ein Teilnehmer des Kommunikationsnetzwerks insbesondere ein Endgerät, zum Beispiel ein mobiles Endgerät. Ein Endgerät ist zum Beispiel allgemein ein Mobiltelefon. Die Person ist zum Beispiel ein Operator oder ein Betreiber des Parkplatzes. Diese Person sieht zum Beispiel, dass es ein Problem für das Fahrzeug bei seiner führerlosen Fahrt gibt und löst einen Notstopp aus. Erfindungsgemäß ist der Teilnehmer der Parkplatzverwaltungsserver. Der Operator kann somit insbesondere das Notstoppsignal mittels des Parkplatzverwaltungsservers über das Kommunikationsnetzwerk an das Fahrzeug senden.

Nach einer nicht zur Erfindung gehörenden Ausführungsform ist vorgesehen, dass das Notstoppsignal vom Fahrzeug aufgrund einer vom Fahrzeug erkannten Gefahrenlage selbst erzeugt wird, wobei das Fahrzeug frei von einer nochmaligen Überprüfung der erkannten Gefahrenlage, ob das Anhalten notwendig ist, anhält.

Dadurch wird insbesondere der technische Vorteil bewirkt, dass ein zur Verfügung stehender Bremsweg für das Fahrzeug nicht unnötig verkürzt wird. Dies im Vergleich zu dem Fall, in dem eine nochmalige Überprüfung der erkannten Gefahrenlage stattfinden würde. Insbesondere wird dadurch der technische Vorteil bewirkt, dass eine Reaktionszeit für das Fahrzeug nach erkannter Gefahrenlage effizient reduziert ist.

Eine Gefahrenlage umfasst zum Beispiel eine drohende Kollision mit einem Objekt. Ein solches Objekt ist zum Beispiel ein weiteres Fahrzeug, eine Infrastruktur des Parkplatzes oder eine Person. Eine Gefahrenlage bedeutet also insbesondere, dass sich ein Objekt im Umfeld des Fahrzeugs befindet, wobei eine Kollision mit diesem Objekt droht.

Das Fahrzeug erkennt die Gefahrenlage nach einer Ausführungsform mittels seiner Umfeldsensorik. Eine Umfeldsensorik umfasst einen oder mehrere Umfeldsensoren. Ein Umfeldsensor ist zum Beispiel einer der folgenden Umfeldsensoren: Videosensor, Lasersensor, Ultraschallsensor, Lidarsensor, Magnetsensor oder Radarsensor.

Das Erkennen der Gefahrenlage umfasst also insbesondere eine Umfelderfassung mittels der Umfeldsensorik des Fahrzeugs. Das erfasste Umfeld wird dann insbesondere auf mögliche Gefahrenlagen analysiert. Bei dieser Analyse werden insbesondere Geschwindigkeitsdaten und Positionsdaten des Fahrzeugs berücksichtigt.

Gemäß einer weiteren Ausführungsform ist vorgesehen, dass bei Vorliegen von mehreren Notstoppsignalen, das Fahrzeug unmittelbar ansprechend auf ein erstes Notstoppsignal anhält, so dass das Verfahren frei von einem Schritt ist, dass das Fahrzeug vor einem Anhalten auf ein zweites Notstoppsignal wartet.

Dadurch wird insbesondere der technische Vorteil bewirkt, dass eine Reaktionszeit des Fahrzeugs effizient verkürzt ist. Insbesondere wird dadurch der technische Vorteil bewirkt, dass ein zur Verfügung stehender Bremsweg nicht unnötig reduziert wird. Dies bezogen auf den Fall, in dem das Fahrzeug noch eine Überprüfung durchführen würde oder noch auf ein zweites Notstoppsignal warten würde.

Diese mehreren Notstoppsignale umfassen zum Beispiel das fahrzeugextern erzeugte Notstoppsignal und das fahrzeugintern erzeugte Notstoppsignal, also das Notstoppsignal, welches vom Fahrzeug aufgrund einer vom Fahrzeug erkannten Gefahrenlage selbst erzeugt wurde. Das heißt also, dass, selbst in dem Fall, in welchem dem Fahrzeug mehrere Notstoppsignale zur Verfügung gestellt werden könnten, es stets unmittelbar ansprechend auf das erste Notstoppsignal anhält. Das Fahrzeug wartet also nicht ab, ob nach dem ersten Notstoppsignal noch ein zweites Notstoppsignal zwecks Bestätigung, dass das Fahrzeug anhalten soll, folgt.

Eine Gefahrenlage umfasst insbesondere ein Problem, welches fahrzeugintern auftritt. Das heißt also, dass die Gefahrenlage ein fahrzeuginternes Problem umfassen kann. Ein fahrzeuginternes Problem umfasst zum Beispiel eine Fehlfunktion eines Fahrzeugsystems, zum Beispiel einer Umfeldsensorik. Zum Beispiel umfasst eine Fehlfunktion eines Fahrzeugsystems eine Fehlfunktion eines Kommunikationssystems. Ein Fahrzeugsystem umfasst zum Beispiel ein Bremssystem, ein Lenkungssystem und/oder ein Antriebssystem. Das heißt also insbesondere, dass eine erkannte Gefahrenlage umfasst, dass eine Fehlfunktion in einem der vorstehend genannten Fahrzeugsysteme aufgetreten ist.

Nach einer Ausführungsform ist die Vorrichtung zum Betreiben eines Fahrzeugs ausgebildet oder eingerichtet, das Verfahren zum Betreiben eines Fahrzeugs aus- oder durchzuführen.

Nach einer Ausführungsform ist vorgesehen, dass das Fahrzeug ausgebildet oder eingerichtet ist, das Verfahren zum Betreiben eines Fahrzeugs aus- oder durchzuführen.

Technische Funktionalitäten der Vorrichtung zum Betreiben eines Fahrzeugs ergeben sich aus entsprechenden technischen Funktionalitäten des Verfahrens zum Betreiben eines Fahrzeugs und umgekehrt. Entsprechende im Zusammenhang mit der Vorrichtung zum Betreiben eines Fahrzeugs gemachte Ausführungen gelten analog für das Verfahren zum Betreiben eines Fahrzeugs und umgekehrt.

Erfindungsgemäß ist vorgesehen, dass eine Notstoppanforderung mittels eines Parkplatzverwaltungsservers des Parkplatzes von einem Teilnehmer eines Kommunikationsnetzwerks über das Kommunikationsnetzwerk empfangen wird, wobei das Notstoppsignal unmittelbar ansprechend auf den Empfang der Notstoppanforderung an das führerlos fahrende Fahrzeug mittels des Parkplatzverwaltungsservers gesendet wird.

Dadurch wird insbesondere der technische Vorteil bewirkt, dass der Teilnehmer des Kommunikationsnetzwerks das Fahrzeug effizient stoppen kann. Insbesondere wird ein zur Verfügung stehender Bremsweg nicht unnötig verkürzt. Insbesondere wird dadurch der technische Vorteil bewirkt, dass eine Reaktionszeit für das Fahrzeug effizient reduziert ist.

Das heißt also, dass der Teilnehmer vom Parkplatzverwaltungsserver anfordert (Notstoppanforderung), dass das Fahrzeug anhalten soll. Der Parkplatzverwaltungsserver sendet daraufhin unmittelbar das Notstoppsignal an das führerlos fahrende Fahrzeug. Das heißt also, dass der Parkplatzverwaltungsserver von einer Überprüfung absieht, ob die Notstoppanforderung zulässig oder notwendig ist oder nicht. Der Parkplatzverwaltungsserver sieht also davon ab, zu überprüfen, ob das Anhalten notwendig ist.

Ein Parkplatz im Sinne der vorliegenden Erfindung kann als eine Parkfläche bezeichnet werden und dient als Abstellfläche für Fahrzeuge. Der Parkplatz bildet somit eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als einer eine Parkgarage ausgebildet.

Eine Zielposition für das Fahrzeug ist zum Beispiel eine Parkposition innerhalb des Parkplatzes (also ein Stellplatz oder ein Parkstand), auf welcher das Fahrzeug parken soll. Eine Zielposition ist zum Beispiel eine Abholposition innerhalb des Parkplatzes, an welcher ein Nutzer sein Fahrzeug abholen soll.

Allgemein ist die führerlose Fahrt des Fahrzeugs von einem automatischen Parkvorgang umfasst. Ein solcher automatischer Parkvorgang umfasst, dass das Fahrzeug von einer Startposition, die auch als eine Abgabeposition bezeichnet werden kann, fahrer- oder führerlos zu einer Parkposition (Zielposition) geführt und dort abgestellt wird. Der automatische Parkvorgang umfasst ferner, dass das Fahrzeug von der Parkposition zu einer Abholposition (weitere Zielposition) fahrer- oder führerlos geführt wird und dort abgestellt wird. Eine Abgabeposition bezeichnet eine Position, an welcher das Fahrzeug von einer Person für die Durchführung eines automatischen Parkvorgangs abgestellt werden soll.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: ein Ablaufdiagramm eines weiteren Verfahrens zum Betreiben eines Fahrzeugs, das nicht gemäß der Erfindung ausgebildet ist,
- Fig. 3: eine Vorrichtung zum Betreiben eines Fahrzeugs,
- Fig. 4: ein Fahrzeug,
- Fig. 5: ein Ablaufdiagramm eines Verfahrens zum Betreiben eines Parkplatzes für Fahrzeuge,
- Fig. 6: ein Ablaufdiagramm eines weiteren Verfahrens zum Betreiben eines Parkplatzes für Fahrzeuge,
- Fig. 7: einen Parkplatz und
- Fig. 8: ein schematisch dargestelltes Szenario, in welchem ein alternatives, nicht zur Erfindung gehörendes Konzept zum Einsatz kommt.

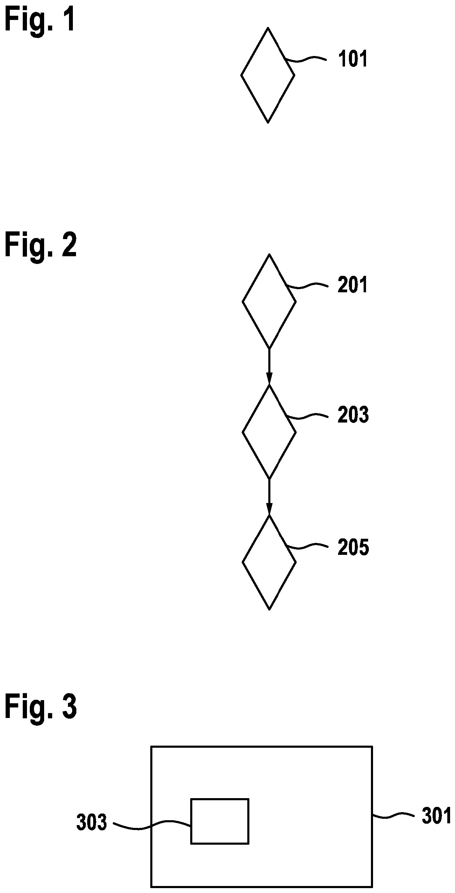

Fig. 1 zeigt ein Ablaufdiagramm eines Verfahrens zum Betreiben eines Fahrzeugs.

Es ist gemäß einem Schritt 101 vorgesehen, dass bei einer führerlosen Fahrt des Fahrzeugs innerhalb eines Parkplatzes das führerlos fahrende Fahrzeug ansprechend auf ein Notstoppsignal anhält. Das Verfahren ist frei von einem Schritt des Überprüfens, ob das Anhalten notwendig ist.

Fig. 2 zeigt ein Ablaufdiagramm eines weiteren Verfahrens zum Betreiben eines Fahrzeugs.

Bei einer führerlosen Fahrt des Fahrzeugs innerhalb eines Parkplatzes stellt das Fahrzeug eine Fehlfunktion in einem Fahrzeugsystem fest. Zum Beispiel erkennt das Fahrzeug, dass eine Umfeldsensorik ausgefallen ist oder nur noch eingeschränkt funktioniert. Zum Beispiel erkennt das Fahrzeug, dass ein Kommunikationssystem ausgefallen ist. Zum Beispiel erkennt das Fahrzeug, dass ein Bremssystem eine Fehlfunktion meldet. Basierend darauf erzeugt das Fahrzeug fahrzeugintern ein Notstoppsignal gemäß einem Schritt 203 und hält ansprechend auf das erzeugte Notstoppsignal gemäß einem Schritt 205 an. Hierbei ist vorgesehen, dass das Fahrzeug davon absieht, die erkannte Gefahrenlage noch einmal dahingehend zu überprüfen, ob das Anhalten notwendig ist.

Fig. 3 zeigt eine Vorrichtung zum Betreiben eines Fahrzeugs.

Die Vorrichtung 301 umfasst eine Notstoppeinrichtung 303, die ausgebildet ist, das Fahrzeug bei einer führerlosen Fahrt des Fahrzeugs innerhalb eines Parkplatzes unmittelbar ansprechend auf ein Notstoppsignal anzuhalten.

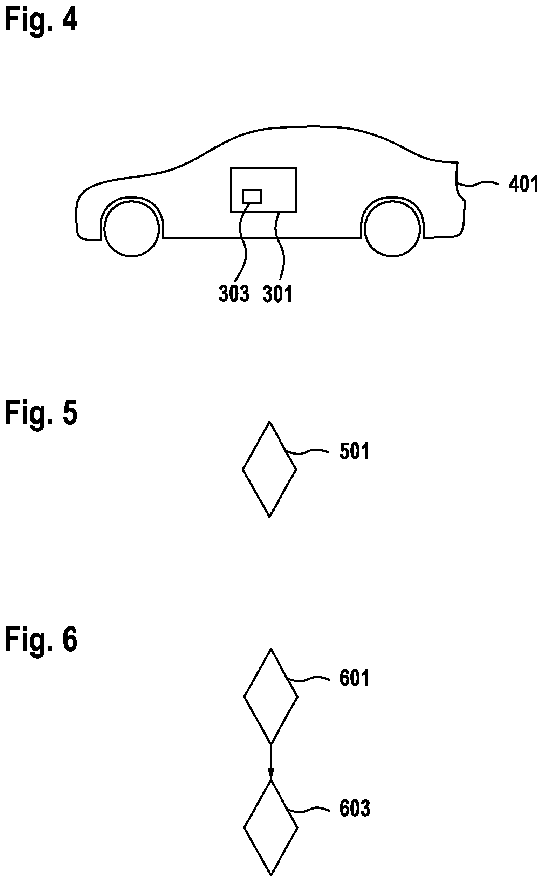

Fig. 4 zeigt ein Fahrzeug 401.

Das Fahrzeug 401 ist für eine führerlose Fahrt innerhalb eines Parkplatzes ausgebildet. Das Fahrzeug 401 umfasst die Vorrichtung 301 der Fig. 3.

Fig. 5 zeigt ein Ablaufdiagramm eines Verfahrens zum Betreiben eines Parkplatzes für Fahrzeuge.

Es ist gemäß einem Schritt 501 vorgesehen, dass bei einer führerlosen Fahrt eines Fahrzeugs innerhalb des Parkplatzes ein Notstoppsignal an das führerlos fahrende Fahrzeug gesendet wird. Das Verfahren ist frei von einem Schritt des Überprüfens vor dem Senden, ob das Anhalten notwendig ist. Das heißt also, dass nicht mehr überprüft wird, ob das Anhalten notwendig ist, bevor das Notstoppsignal an das führerlos fahrende Fahrzeug gesendet wird.

Fig. 6 zeigt ein Ablaufdiagramm eines weiteren Verfahrens zum Betreiben eines Parkplatzes für Fahrzeuge.

In einem Schritt 601 wird eine Notstoppanforderung mittels eines Parkplatzverwaltungsservers des Parkplatzes von einem Teilnehmer eines Kommunikationsnetzwerks über das Kommunikationsnetzwerk empfangen. Gemäß einem Schritt 603 ist vorgesehen, dass ein Notstoppsignal unmittelbar ansprechend auf den Empfang der Notstoppanforderung erzeugt und an das führerlos fahrende Fahrzeug mittels des Parkplatzverwaltungsservers gesendet wird. Das heißt also, dass die Notstoppanforderung nicht mehr dahingehend überprüft wird, ob ein Notstopp des Fahrzeugs, also ein Anhalten, notwendig ist. Stattdessen wird ohne vorherige Prüfung direkt und unmittelbar das Notstoppsignal an das führerlos fahrende Fahrzeug über das Kommunikationsnetzwerk gesendet.

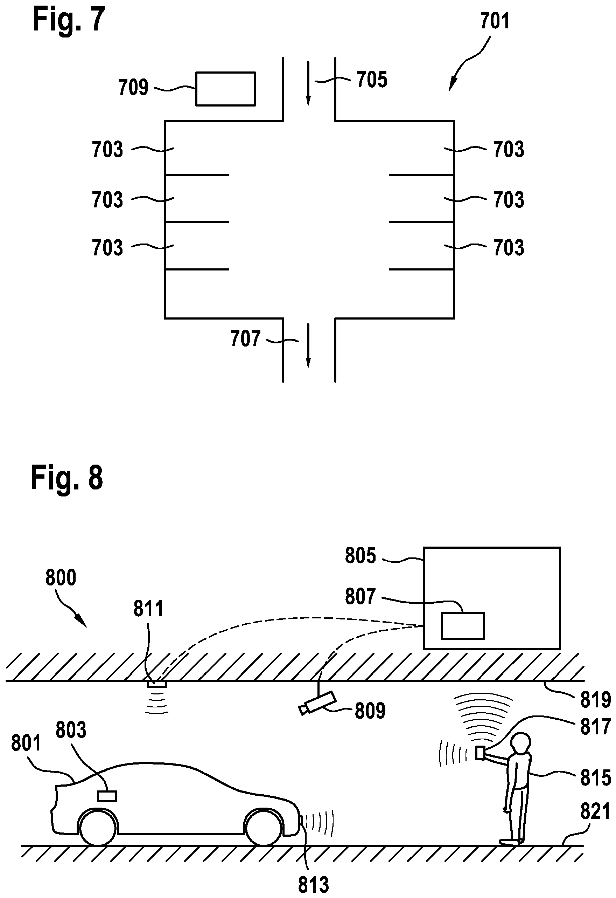

Fig. 7 zeigt einen Parkplatz 701 für Fahrzeuge.

Der Parkplatz 701 umfasst eine Einfahrt 705 und eine der Einfahrt gegenüberliegende Ausfahrt 707. In weiteren nicht gezeigten Ausführungsbeispielen sind mehrere Einfahrten und/oder mehrere Ausfahrten vorgesehen.

Der Parkplatz 701 umfasst mehrere Parkpositionen 703, auf welchen Fahrzeuge parken können.

Der Parkplatz 701 umfasst einen Parkplatzverwaltungsserver 709, der ausgebildet ist, das Verfahren zum Betreiben eines Parkplatzes für Fahrzeuge durchzuführen.

So empfängt zum Beispiel der Parkplatzverwaltungsserver 709 eine Notstoppanforderung von einer Person (nicht gezeigt), die innerhalb des Parkplatzes 701 unterwegs ist. Zum Beispiel hat die Person ein Problem für ein innerhalb des Parkplatzes 701 führerlos fahrendes Fahrzeug erkannt. Insofern fordert die Person ein Anhalten des führerlos fahrenden Fahrzeugs vom Parkplatzverwaltungsserver an. Insofern sendet die Person eine entsprechende Notstoppanforderung an den Parkplatzverwaltungsserver 709. Der Parkplatzverwaltungsserver 709 erzeugt und sendet unmittelbar ansprechend auf den Empfang der Notstoppanforderung ein Notstoppsignal an das führerlos fahrende Fahrzeug, sodass das Fahrzeug ansprechend auf den Empfang des Notstoppsignals anhält.

Es ist vorgesehen, dass keine Überprüfung durchgeführt ist, ob das Anhalten notwendig ist.

Somit ist also der Parkplatz 701 ausgebildet, das Verfahren zum Betreiben eines Parkplatzes für Fahrzeuge aus- oder durchzuführen.

Fig. 8 zeigt ein Szenario, in welchem ein alternatives Konzept eingesetzt wird.

Gemäß Fig. 8 ist in schematisch vereinfachter Darstellung ein Parkplatz 800 gezeigt. Auf einem Fahrweg 821 des Parkplatzes 800 fährt ein Fahrzeug 801.

Das Fahrzeug 801 umfasst zum Beispiel ein Computerprogramm 803, welches zum Beispiel Schritte zur Durchführung des Verfahrens zum Betreiben eines Fahrzeugs umfasst. Das Fahrzeug 801 umfasst ferner eine Umfeldsensorik 813, die zum Beispiel einen Radarsensor umfasst. Das Fahrzeug 801 erfasst somit mittels seiner Umfeldsensorik 813 eine Person 815, die sich vor dem Fahrzeug 801 auf dem Fahrweg 821 befindet.

Sobald das Fahrzeug 801 die Person 815 erkannt hat, stuft es diese Situation als eine Gefahrenlage ein und erzeugt ein Notstoppsignal und hält unmittelbar ansprechend auf die Erzeugung des Notstoppsignals an, um eine Kollision mit der Person 815 zu verhindern. Hierbei wartet das Fahrzeug 801 nicht noch ab, ob nicht noch ein zweites Notstoppsignal an das Fahrzeug gesendet wird zwecks Bestätigung der erkannten Gefahrenlage. Auch ist nicht vorgesehen, dass das Fahrzeug 801 die erkannte Gefahrenlage noch einmal überprüft. Zum Beispiel könnte das Fahrzeug 801 die mittels der Umfeldsensorik 813 gebildeten oder ermittelten Umfeldsensordaten noch einmal analysieren. Doch dies ist erfindungsgemäß gerade nicht vorgesehen.

Die Person 815 trägt ein mobiles Endgerät 817 mit sich. Die Person 815 erkennt das Fahrzeug 801, welches ein führerlos fahrendes Fahrzeug ist. Die Person 815 erkennt, dass das Fahrzeug 801 auf sie zufährt. Sie fordert somit einen Notstopp, also ein Anhalten, von einem Parkplatzverwaltungsserver 805 des Parkplatzes 801 an. Hierfür sendet die Person 815 mittels des Endgeräts 817 eine entsprechende Notstoppanforderung an den Parkplatzverwaltungsserver 805.

Alternativ oder zusätzlich sendet die Person 815 ein Notstoppsignal mittels des Endgeräts 817 direkt, also ohne Umweg über den Parkplatzverwaltungsserver 805, an das Fahrzeug 801.

Der Parkplatzverwaltungsserver 805 empfängt die Notstoppanforderung und erzeugt und sendet daraufhin unmittelbar ein Notstoppsignal an das Fahrzeug 801. Für das Senden des Notstoppsignals an das Fahrzeug 801 verwendet der Parkplatzverwaltungsserver 805 eine Kommunikationsschnittstelle 811, die zum Beispiel eine WLAN-Basisstation ist, wobei die Kommunikationsschnittstelle 811 an einer Decke 819 des Parkplatzes 801 angebracht ist.

An der Decke 819 des Parkplatzes 801 ist ferner eine Kamera 809 angebracht, die das Fahrzeug 801 erfasst. Die Kamera 809 oder eine andere Kamera hat auch die Person 817 erfasst, auch wenn die Darstellung gemäß Fig. 8 lediglich zeigt, dass die Kamera 809 auf das Fahrzeug 801 gerichtet ist. Der Parkplatzverwaltungsserver 805 geht somit von einer möglichen Kollision zwischen dem Fahrzeug 801 und der Person 815 aus.

Entsprechend erzeugt dann der Parkplatzverwaltungsserver 805 ein Notstoppsignal und sendet dieses über die Kommunikationsschnittstelle 811 an das Fahrzeug 801, sodass das Fahrzeug 801 ansprechend auf den Empfang des Notstoppsignals unmittelbar anhält.

Bei all den verwendeten Notstoppsignalen respektive Notstoppanforderungen ist vorgesehen, dass jeweils gerade nicht überprüft wird, ob ein Anhalten notwendig ist. Zum Beispiel überprüft der Parkplatzverwaltungsserver 805 bei einem Empfang einer Notstoppanforderung gerade nicht, ob er ebenfalls ein Anhalten des Fahrzeugs 801 für sinnvoll hält oder nicht. Zum Beispiel könnte der Parkplatzverwaltungsserver 805 die Notstoppanforderung seitens der Person 815 mittels seiner Kamera 809 plausibilisieren. Doch dieses Plausibilisieren würde Zeit kosten und einen Bremsweg, der für das Fahrzeug 801 zur Verfügung steht, um nicht mit der Person 815 zu kollidieren, verkürzen. Erfindungsgemäß ist also vorgesehen, dass von einer entsprechenden Überprüfung, ob ein Anhalten notwendig ist, abgesehen wird. Auf eine solche Überprüfung wird somit verzichtet.

Der erfindungsgemäße Grundgedanke ist also insbesondere darin zu sehen, ein effizientes technisches Konzept bereitzustellen, welches ein effizientes Anhalten, also eine effiziente Durchführung eines Notstopps, eines innerhalb eines Parkplatzes führerlos fahrenden Fahrzeugs ermöglicht. Der erfindungsgemäße Grundgedanke ist insbesondere darin zu sehen, dass bei einer unklaren und/oder gefährlichen Situation (Gefahrenlage) sofort auf das erste Notstoppsignal (welches auch als ein Auslösesignal bezeichnet werden kann, insofern es ein Anhalten des Fahrzeugs auslöst) ein Notstopp, also ein Anhalten, ausgelöst wird. Das heißt also, dass keine Überprüfung mehr von weiteren Signalen und/oder Datenquellen (zum Beispiel Kameras im Parkplatz) ausgeführt wird.

Der erfindungsgemäße Vorteil ist insbesondere darin zu sehen, dass ein sehr schneller Notstopp gewährleistet ist.

Situationen oder Szenarien, in denen ein Anhalten angefordert wird respektive in denen ein Notstoppsignal an das Fahrzeug gesendet wird respektive in denen das Fahrzeug selbst ein Notstoppsignal erzeugt und ansprechend darauf anhält, sind insbesondere eine oder mehrere der folgenden Situationen oder Szenarien:
Das Fahrzeug erkennt eine unklare und/oder erkannte Problemsituation. Solche Situationen sind zum Beispiel folgende Situationen:
Ein Fußgänger kreuzt unvermittelt den Fahrtweg des Fahrzeugs, zum Beispiel kommt der Fußgänger zwischen zwei Fahrzeugen hervor.

Ein Fahrzeug kreuzt unvermittelt den Fahrtweg des Fahrzeugs, kommt zum Beispiel aus einer Parklücke herausgefahren und hat das führerlos fahrende Fahrzeug nicht gesehen.

Ein Kommunikationsproblem ist aufgetreten.

Das Parkplatzverwaltungssystem hat einen internen Fehler. Dieser interne Fehler kann nach einer Ausführungsform wie folgt erkannt werden. Das Parkplatzverwaltungssystem führt Checkroutinen und/oder redundante Berechnungsfunktionen durch. Damit werden Komponenten des Parkplatzverwaltungssystems und/oder das Parkplatzverwaltungssystem als ganzes selbst überprüft. Zum Bespiel werden die Überwachungssensoren (zum Beispiel Kameras), also zum Beispiel die Umfeldsensoren, auf Funktionsfähigkeit überprüft, zum Beispiel auf ein eingefrorenes Bild und / oder ob überhaupt ein Signal von der Kamera (allgemein vom Umfeldsensor) kommt. Wenn auf diese Art und Weise festgestellt wird, dass ein Umfeldsensor nicht ordnungsgemäß funktioniert, so wird das als ein interner Fehler erkannt.

Wenn das Parkplatzverwaltungssystem einen Fehler erkennt, wird das Auftreten des Fehlers dem Fahrzeug über das Kommunikationsnetzwerk mitgeteilt, woraufhin das Fahrzeug anhält, ohne abzuwarten, ob das Parkplatzverwaltungssystem auch wirklich explizit das Anhalten vom Fahrzeug anfordert. Das heißt, dass allein ein interner Fehler im Parkplatzverwaltungssystem ausreicht, dass das Fahrzeug bei Kenntnis des internen Fehlers anhält.

Es ist nach einer Ausführungsform vorgesehen, dass das Parkplatzverwaltungssystem nach dem Erkennen des internen Fehlers ein Notstoppsignal an das Fahrzeug über das Kommunikationsnetzwerk sendet.

Das Fahrzeug hat einen internen Fehler. Dieser interne Fehler kann zum Beispiel analog zum Erkennen eines internen Fehlers im Parkplatzverwaltungssystem erkannt werden. Auch hier führt der interne Fehler des Fahrzeugs sofort zu einem Anhalten des Fahrzeugs.

Weiterhin können zum Beispiel Probleme an bzw. von verschiedenen Orten und/oder Menschen und/oder Produkten erkannt werden. Beispiele sind folgende:
Im Fahrzeug wird über fahrzeuginterne Sensorsysteme festgestellt, dass ein Fußgänger in den Fahrtweg läuft. Ein solch fahrzeuginternes Sensorsystem ist zum Beispiel eine Umfeldsensorik des Fahrzeugs.

Ein internes Programm, welches also auf einem Computer des Fahrzeugs läuft, detektiert Probleme, zum Beispiel: keine Kommunikation zwischen dem Fahrzeug und dem Parkplatzverwaltungsserver und/oder keine Kommunikation zwischen dem Fahrzeug und einem weiteren Fahrzeug, einen internen Funktionsfehler (zum Beispiel funktioniert eine autonome Fahrfunktionalität nicht mehr oder nicht mehr korrekt), interne Probleme mit Komponenten (Fahrzeugsystemen, zum Beispiel die Bremse meldet einen Fehler).

Das interne Programm kann zum Beispiel eine Situation nicht eindeutig einschätzen, wie zum Beispiel, ob sich vielleicht Fußgänger im Fahrtweg befinden.

Im Parkplatzmanagement oder Parkplatzverwaltungssystem können zum Beispiel folgende Situationen auftreten:
Zunächst können ähnliche oder gleiche Situationen auftreten bezogen auf das Fahrzeug, nur, dass hier anstelle des Fahrzeugs das Parkplatzverwaltungssystem steht.

Ein Operator des Parkplatzes sieht ein Problem und will einen Notstopp für eines oder alle Fahrzeuge auslösen.

Der Fahrer, der noch in der Nähe ist, sieht ein Problem und will einen Notstopp für eines oder mehrere oder alle Fahrzeuge auslösen. Zum Beispiel kann die Person 815 gemäß Fig. 8 der Fahrer sein, der sich noch in der Nähe seines Fahrzeugs 801 befindet.

Der Fahrer kann einen solchen Notstopp zum Beispiel über sein Mobiltelefon direkt auslösen, indem er direkt an sein Fahrzeug ein Notstoppsignal sendet.

Insbesondere kann der Fahrer über sein Mobiltelefon eine entsprechende Notstoppanforderung an das Parkplatzverwaltungssystem senden, welches ansprechend darauf ein Notstoppsignal an das Fahrzeug sendet.

Ein Passant, der in der Nähe ist, sieht ein Problem und will einen Notstopp eines oder mehrerer oder aller Fahrzeuge auslösen. Dies analog zum Fahrer über ein Mobiltelefon und mittels einer Notstoppanforderung, die an den Parkplatzverwaltungsserver gesendet wird.

Erfindungsgemäß umfasst der Parkplatz 800 einen Notschalter, der bei Betätigung durch einen Passanten oder Nutzer eine Notstoppanforderung an den Parkplatzverwaltungsserver sendet, sodass dieser dann ansprechend auf den Empfang der Notstoppanforderung unmittelbar ein Notstoppsignal an das Fahrzeug sendet.

Allgemein lässt sich das erfindungsgemäße Konzept auf mehrere führerlos fahrende Fahrzeuge, die innerhalb des Parkplatzes fahren, übertragen, so dass auch diese Fahrzeuge ansprechend auf ein Notstoppsignal unmittelbar anhalten, wobei von einer Überprüfung, ob das Anhalten notwendig ist, abgesehen wird.

## Patentansprüche

1. Verfahren zum Betreiben eines Fahrzeugs (801), wobei bei einer führerlosen Fahrt des Fahrzeugs (801) innerhalb eines Parkplatzes (701, 800) das führerlos fahrende Fahrzeug (801) unmittelbar ansprechend auf ein Notstoppsignal anhält (501), wobei das Verfahren frei von einem Schritt des Überprüfens ist, ob das Anhalten notwendig ist, wobei das Notstoppsignal ein fahrzeugextern erzeugtes Notstoppsignal ist, wobei das Fahrzeug (801) dieses fahrzeugextern erzeugte Notstoppsignal über ein Kommunikationsnetzwerk empfängt und unmittelbar ansprechend auf den Empfang des Notstoppsignals anhält ohne nochmalige Überprüfung, ob das Anhalten notwendig ist, sodass das Fahrzeug (801) selbst ebenfalls keine Überprüfung mehr durchführt, ob das Anhalten notwendig ist, wobei das Fahrzeug (801) das Notstoppsignal von einem Teilnehmer eines Kommunikationsnetzwerks über das Kommunikationsnetzwerk empfängt, wobei der Teilnehmer ein Parkplatzverwaltungsserver des Parkplatzes (701, 800) ist, wobei der Parkplatz (701, 800) einen Notschalter umfasst, der bei Betätigung durch einen Passanten oder Nutzer eine Notstoppanforderung an den Parkplatzverwaltungsserver sendet, sodass dieser dann ansprechend auf den Empfang der Notstoppanforderung unmittelbar das Notstoppsignal an das Fahrzeug (801) sendet.

2. Verfahren nach Anspruch 1, wobei das Notstoppsignal fahrzeugextern erzeugt und ohne nochmalige Überprüfung, ob das Anhalten notwendig ist, an das Fahrzeug (801) gesendet wird, wobei das Fahrzeug (801) unmittelbar ansprechend auf den Empfang des Notstoppsignals anhält.

3. Verfahren nach einem der vorherigen Ansprüche, wobei bei Vorliegen von mehreren Notstoppsignalen, das Fahrzeug (801) unmittelbar ansprechend auf ein erstes Notstoppsignal anhält, so dass das Verfahren frei von einem Schritt ist, dass das Fahrzeug (801) vor einem Anhalten auf ein zweites Notstoppsignal wartet.

4. Verfahren zum Betreiben eines Parkplatzes (701, 800) für Fahrzeuge (801), wobei bei einer führerlosen Fahrt eines Fahrzeugs (801) innerhalb des Parkplatzes (701, 800) ein Notstoppsignal mittels eines Parkplatzverwaltungsservers des Parkplatzes (701, 800) fahrzeugextern erzeugt und ohne nochmalige Überprüfung durch den Parkplatzverwaltungsserver, ob das Anhalten notwendig ist, an das führerlos fahrende Fahrzeug (801) mittels des Parkplatzverwaltungsservers über ein Kommunikationsnetzwerk als Teilnehmer des Kommunikationsnetzwerks gesendet (501) wird, wobei das Verfahren frei von einem Schritt des Überprüfens vor dem Senden ist, ob das Anhalten notwendig ist, wobei der Parkplatz (701, 800) einen Notschalter umfasst, der bei Betätigung durch einen Passanten oder Nutzer eine Notstoppanforderung an den Parkplatzverwaltungsserver sendet, sodass dieser dann ansprechend auf den Empfang der Notstoppanforderung unmittelbar das Notstoppsignal an das Fahrzeug (801) sendet.

5. Verfahren nach Anspruch 4, wobei eine Notstoppanforderung von einem weiteren Teilnehmer (815) des Kommunikationsnetzwerks über das Kommunikationsnetzwerk mittels des Parkplatzverwaltungsservers empfangen (601) wird, wobei das Notstoppsignal unmittelbar ansprechend auf den Empfang der Notstoppanforderung an das führerlos fahrende Fahrzeug (801) mittels des Parkplatzverwaltungsservers gesendet (603) wird.

6. Parkplatz (701, 800) für Fahrzeuge (801), wobei der Parkplatz (701, 800) ausgebildet ist, das Verfahren nach Anspruch 4 oder 5 durchzuführen.

7. Computerprogramm, umfassend Programmcode zur Durchführung des Verfahrens nach einem der Ansprüche 1 bis 3 und/oder 4 oder 5, wenn das Computerprogramm auf einem Computer ausgeführt wird.

## Claims

1. Method for operating a vehicle (801), wherein, during a driverless journey of the vehicle (801) within a parking area (701, 800), the driverlessly driving vehicle (801) stops (501) immediately in response to an emergency stop signal, wherein the method is free of a step of checking whether stopping is necessary, wherein the emergency stop signal is an emergency stop signal generated outside the vehicle, wherein the vehicle (801) receives this emergency stop signal generated outside the vehicle via a communication network and stops immediately in response to the reception of the emergency stop signal without checking again whether stopping is necessary, with the result that the vehicle (801) itself likewise no longer carries out a check in order to determine whether stopping is necessary, wherein the vehicle (801) receives the emergency stop signal from a subscriber of a communication network via the communication network, wherein the subscriber is a parking area management server of the parking area (701, 800), wherein the parking area (701, 800) comprises an emergency switch which, when actuated by a passer-by or user, transmits an emergency stop request to the parking area management server, with the result that the latter then transmits the emergency stop signal to the vehicle (801) immediately in response to the reception of the emergency stop request.

2. Method according to Claim 1, wherein the emergency stop signal is generated outside the vehicle and is transmitted to the vehicle (801) without checking again whether stopping is necessary, wherein the vehicle (801) stops immediately in response to the reception of the emergency stop signal.

3. Method according to one of the preceding claims, wherein, if there are a plurality of emergency stop signals, the vehicle (801) stops immediately in response to a first emergency stop signal, with the result that the method is free of a step requiring the vehicle (801) to wait for a second emergency stop signal before stopping.

4. Method for operating a parking area (701, 800) for vehicles (801), wherein, during a driverless journey of a vehicle (801) within the parking area (701, 800), an emergency stop signal is generated outside the vehicle by means of a parking area management server of the parking area (701, 800) and is transmitted (501) to the driverlessly driving vehicle (801), without the parking area management server again checking whether stopping is necessary, by means of the parking area management server via a communication network as a subscriber of the communication network, wherein the method is free of a step of checking, before transmission, whether stopping is necessary, wherein the parking area (701, 800) comprises an emergency switch which, when actuated by a passer-by or user, transmits an emergency stop request to the parking area management server, with the result that the latter then transmits the emergency stop signal to the vehicle (801) immediately in response to the reception of the emergency stop request.

5. Method according to Claim 4, wherein an emergency stop request is received (601) from a further subscriber (815) of the communication network via the communication network by means of the parking area management server, wherein the emergency stop signal is transmitted (603) to the driverlessly driving vehicle (801) immediately in response to the reception of the emergency stop request by means of the parking area management server.

6. Parking area (701, 800) for vehicles (801), wherein the parking area (701, 800) is designed to carry out the method according to Claim 4 or 5.

7. Computer program, comprising program code for carrying out the method according to one of Claims 1 to 3 and/or 4 or 5 when the computer program is executed on a computer.

## Revendications

1. Procédé pour faire fonctionner un véhicule (801), dans lequel, lorsque le véhicule (801) se déplace sans conducteur à l'intérieur d'un parc de stationnement (701, 800), le véhicule (801) se déplaçant sans conducteur s'arrête (501) immédiatement en réponse à un signal d'arrêt d'urgence, dans lequel le procédé se passe d'une étape consistant à vérifier si l'arrêt est nécessaire, dans lequel le signal d'arrêt d'urgence est un signal d'arrêt d'urgence généré extérieurement au véhicule, dans lequel le véhicule (801) reçoit ledit signal d'arrêt d'urgence généré extérieurement au véhicule par l'intermédiaire d'un réseau de communication et s'arrête immédiatement en réponse à la réception du signal d'arrêt d'urgence sans vérifier à nouveau si l'arrêt est nécessaire, de sorte que le véhicule (801) n'effectue plus lui-même de vérification pour savoir si l'arrêt est nécessaire, dans lequel le véhicule (801) reçoit le signal d'arrêt d'urgence d'un abonné d'un réseau de communication par l'intermédiaire du réseau de communication, dans lequel l'abonné est un serveur de gestion de parc de stationnement du parc de stationnement (701, 800), dans lequel le parc de stationnement (701, 800) comprend un commutateur d'urgence qui, lorsqu'il est actionné par un passant ou un utilisateur, envoie une demande d'arrêt d'urgence au serveur de gestion de parc de stationnement, de sorte que ce dernier envoie alors immédiatement le signal d'arrêt d'urgence au véhicule (801) en réponse à la réception de la demande d'arrêt d'urgence.

2. Procédé selon la revendication 1, dans lequel le signal d'arrêt d'urgence est généré extérieurement au véhicule et est envoyé au véhicule (801) sans vérifier à nouveau si l'arrêt est nécessaire, dans lequel le véhicule (801) s'arrête immédiatement en réponse à la réception du signal d'arrêt d'urgence.

3. Procédé selon l'une des revendications précédentes, dans lequel, en présence de plusieurs signaux d'arrêt d'urgence, le véhicule (801) s'arrête immédiatement en réponse à un premier signal d'arrêt d'urgence, de sorte que le procédé se passe d'une étape consistant à faire en sorte que le véhicule (801) attende un deuxième signal d'arrêt d'urgence avant de s'arrêter.

4. Procédé pour faire fonctionner un parc de stationnement (701, 800) pour véhicules (801), dans lequel, lorsqu'un véhicule (801) se déplace sans conducteur à l'intérieur du parc de stationnement (701, 800), un signal d'arrêt d'urgence est généré extérieurement au véhicule au moyen d'un serveur de gestion de parc de stationnement du parc de stationnement (701, 800) et est envoyé (501) au véhicule (801) se déplaçant sans conducteur au moyen du serveur de gestion de parc de stationnement par l'intermédiaire d'un réseau de communication en tant qu'abonné du réseau de communication, sans que le serveur de gestion de parc de stationnement ne vérifie à nouveau si l'arrêt est nécessaire, dans lequel le procédé se passe d'une étape consistant à vérifier avant l'envoi si l'arrêt est nécessaire, dans lequel le parc de stationnement (701, 800) comprend un commutateur d'urgence qui, lorsqu'il est actionné par un passant ou un utilisateur, envoie une demande d'arrêt d'urgence au serveur de gestion de parc de stationnement, de sorte que ce dernier envoie alors immédiatement le signal d'arrêt d'urgence au véhicule (801) en réponse à la réception de la demande d'arrêt d'urgence.

5. Procédé selon la revendication 4, dans lequel une demande d'arrêt d'urgence est reçue (601) d'un autre abonné (815) du réseau de communication par l'intermédiaire du réseau de communication au moyen du serveur de gestion de parc de stationnement, dans lequel le signal d'arrêt d'urgence est immédiatement envoyé (603) au véhicule (801) se déplaçant sans conducteur en réponse à la réception de la demande d'arrêt d'urgence au moyen du serveur de gestion de parc de stationnement.

6. Parc de stationnement (701, 800) pour véhicules (801), dans lequel le parc de stationnement (701, 800) est conçu pour mettre en œuvre le procédé selon la revendication 4 ou 5.

7. Programme informatique, comprenant un code de programme destiné à mettre en œuvre le procédé selon l'une des revendications 1 à 3 et/ou 4 ou 5 lorsque le programme informatique est exécuté sur un ordinateur.
